# EUROPÄISCHE PATENTSCHRIFT

(11) **EP 2 315 960 B1**
(45) Veröffentlichungstag und Bekanntmachung des Hinweises auf die Patenterteilung: **16.12.2015**
(21) Anmeldenummer: 09778129.8
(22) Anmeldetag: 26.08.2009
(51) Int. Cl.: F16D 3/28, F16D 3/38, F16D 3/42, F16D 1/08

(54) **KREUZGELENK ZUM VERBINDEN ZWEIER WELLENABSCHNITTE**
UNIVERSAL JOINT FOR CONNECTING TWO SHAFT SECTIONS
JOINT UNIVERSEL DESTINÉ À RACCORDER DEUX SEGMENTS D'ARBRE

(30) Priorität: 28.08.2008 DE 102008044758
(43) Veröffentlichungstag der Anmeldung: 04.05.2011
(73) Patentinhaber: Süddeutsche Gelenkscheibenfabrik GmbH & Co. KG, 84478 Waldkraiburg (DE)
(72) Erfinder: ROTHE, Joachim, 84453 Mühldorf (DE)
(74) Vertreter: Thum, Bernhard
(86) Internationale Anmeldenummer: PCT/EP2009/006188
(87) Internationale Veröffentlichungsnummer: WO 2010/022932

(56) Entgegenhaltungen:
- WO-A1-99/58867
- WO-A1-2008/022625
- WO-A1-2009/015425
- DE-U- 1 708 442
- FR-A1- 2 538 056
- GB-A- 2 310 706
- GB-A- 191 406 343
- US-A- 2 025 828
- US-A- 4 452 654
- US-A- 5 655 621
- US-A1- 2004 099 087

## Beschreibung

Die vorliegende Erfindung betrifft ein Kreuzgelenk zum Verbinden zweier Wellenabschnitte in einer Wellenanordnung.

Herkömmliche Kreuzgelenke sind aus dem Stand der Technik hinlänglich bekannt und weisen zwei mit je einer Welle verbindbare Gelenkgabeln auf, die über ein Gelenkteil miteinander koppelbar sind. Kreuzgelenke werden üblicherweise in Wellenanordnungen eingesetzt, bei denen Drehmomente über eine Mehrzahl von Wellen übertragen werden, die nicht parallel verlaufen bzw. die um einen bestimmten Winkel zueinander versetzt verlaufen. Kreuzgelenke finden insbesondere bei Gelenkwellen zur Übertragung von Antriebskräften und Lenkkräften in Kraftfahrzeugen Anwendung. Herkömmliche Kreuzgelenke erfüllen zwar die Aufgabe, Drehmomente zwischen zueinander abgewinkelten Wellenabschnitten zu übertragen, dabei werden jedoch gerade im Antriebsstrang in axialer Richtung der Welle auftretende Stöße und Aggregatsbewegungen der Wellenanordnung auf die im Antriebsstrang eines Kraftfahrzeugs auf das Kreuzgelenk folgenden Komponenten, z.B. auf Lager und Schwingungsdämpfer, übertragen, was sich negativ auf die Funktion und Lebensdauer dieser Komponenten auswirken kann.

DE 1 708 442 U offenbart ein Kreuzgelenk, bei dem eine Welle mit ihrem gabelförmigen Ende Lagerbuchsen für ein Verbindungskreuz trägt. Das Verbindungskreuz ist in Lagerstellen eines Schwingrahmens drehbar gelagert. Über seine Zapfen ist der Schwingrahmen in einem Gabelende einer Welle drehbar gelagert.

Es ist eine Aufgabe der vorliegenden Erfindung, ein Kreuzgelenk zum Verbinden zweier Wellenabschnitte der eingangs bezeichneten Art bereitzustellen, das Aggregatsbewegungen und Verlagerungen in axialer Richtung ausgleichen kann.

Diese Aufgabe wird durch ein Kreuzgelenk zum Verbinden zweier Wellenabschnitte in einer Wellenanordnung mit den Merkmalen des Anspruchs 1 gelöst.

Durch die axial verschiebbare Aufnahme eines der Wellenabschnitte in der Gelenkgabel oder dem Gelenkinnenteil kann eine Übertragung von im Antriebsstrang eines Kraftfahrzeugs auftretenden Stößen bzw. Erschütterungen, die in axialer Richtung wirken, auf die in einer Wellenanordnung an das Kreuzgelenk anschließenden Komponenten, wie z.B. Lager und Schwingungsdämpfer, sowie auf das Kreuzgelenk selbst vermieden werden. Dadurch kann das erfindungsgemäße Kreuzgelenk die Lebensdauer der Komponenten einer Wellenanordnung, d.h. Lager, Schwingungsdämpfer und anderer Komponenten eines Antriebsstrangs, deutlich erhöhen.

Um die Gelenkgabel an das Zwischenglied und das Zwischenglied an das Gelenkinnenteil koppeln zu können, sieht eine bevorzugte Ausführungsform der Erfindung vor, dass die Lagerelemente und die korrespondierenden Komplementärlagerelemente jeweils von einem Paar miteinander zusammenwirkender Lagerbolzen und Lageröffnungen gebildet werden.

Damit die in einem Antriebsstrang eines Fahrzeugs auftretenden Vibrationen bzw. der Körperschall gedämpft sowie Reibungswirkungen zwischen der Gelenkgabel und dem Zwischenglied bzw. dem Zwischenglied und dem Gelenkinnenteil vermieden werden können, sieht eine Weiterbildung der Erfindung vor, dass zwischen der Lageröffnungen und den Lagerbolzen Dämpfungskörper angeordnet werden können.

Um eine in axialer Richtung eines der Wellenabschnitte verschiebbare Aufnahme bereitzustellen und die Grundfunktion eines Kreuzgelenks, nämlich die Übertragung von Drehmomenten zwischen zwei zueinander abgewinkelt verlaufenden Wellenabschnitten, in kompakter Weise zu gewährleisten, wird gemäß einer bevorzugten Ausführungsform der Erfindung das Zwischenglied ringförmig ausgebildet und in der Gelenkgabel aufgenommen, wobei das Gelenkinnenteil in dem Zwischenglied angeordnet ist und die erste und die zweite Gelenkachse durch das Zwischenglied verlaufen. Mit anderen Worten sind im Gegensatz zum Stand der Technik, bei dem die beiden Gelenkgabeln auf dieselbe Art außen an einem Zwischenglied angeordnet bzw. befestigt sind, die Komponenten des erfindungsgemäßen Kreuzgelenks ausgehend von der Gelenkgabel kompakt ineinander angeordnet. In diesem Zusammenhang ist ferner zu erwähnen, dass die ersten und zweiten Gelenkachsen, die durch das Zwischenglied verlaufen, einander kreuzen.

Da einer der Wellenabschnitte in Richtung seiner Längsachse verschiebbar in der Gelenkgabel oder dem Gelenkinnenteil aufgenommen ist, jedoch weiterhin Drehmomente über das erfindungsgemäße Kreuzgelenk zu übertragen sind, ist gemäß einer bevorzugten Ausführungsform vorgesehen, dass das Gelenkinnenteil oder/und die Gelenkgabel eine Aufnahmeöffnung mit einer Innenprofilierung, vorzugsweise einer Innenverzahnung, zum drehfesten Verbinden mit dem Wellenabschnitt aufweist, wobei der der jeweiligen Innenprofilierung zugeordnete Wellenabschnitt eine korrespondierende Außenprofilierung, insbesondere eine Außenverzahnung, aufweist. Mit anderen Worten werden die zu übertragenden Drehmomente über einen Formschluss zwischen der Innenprofilierung des Gelenkinnenteils und der zu dieser korrespondierenden Außenprofilierung eines der Wellenabschnitte übertragen, wodurch der entsprechende Wellenabschnitt in dem Gelenkinnenteil oder der Gelenkgabel zum Ausgleich von Axialbewegungen verschiebbar aufgenommen werden kann. Dem ist hinzuzufügen, dass gemäß einer Weiterbildung der Erfindung die Aufnahmeöffnung eine Durchgangsbohrung mit einer durchlaufenden Längsverzahnung sein kann.

Wie voranstehend bereits mehrfach erwähnt, können durch das erfindungsgemäße Kreuzgelenk die in einem Antriebsstrang eines Kraftfahrzeugs auftretenden axialen Aggregatsbewegungen aufgrund von Stößen und Erschütterungen ausgeglichen werden, wodurch deren Übertragung auf die in dem Antriebsstrang folgenden Komponenten verhindert wird. Dadurch wird eine an einem Ende des Kreuzgelenks angeordnete, schwingungsreduzierende Drehmomentübertragungseinrichtung in ihrer Funktion nicht eingeschränkt, was zu einer Erhöhnung ihrer Lebensdauer führt.

Durch die Integration der Drehmomentübertragungsvorrichtung in die Gelenkgabel erhält das Kreuzgelenk mit integrierter, schwingungsreduzierender Drehmomentübertragungseinrichtung eine kompakten Aufbau, da die Schwingungsdämpfung sowie die axial verschiebbare Aufnahme für einen der Wellenabschnitte in einem Bauteil stattfinden. In diesem Zusammenhang ist ferner zu erwähnen, dass in einem der Übertragungsteile eine Aufnahmeöffnung vorgesehen ist, die eine Innenprofilierung, vorzugsweise eine Innenverzahnung, aufweist.

Gemäß einer Ausführungsform der Erfindung weist das Gelenkinnenteil zum Verbinden des Kreuzgelenks mit beispielsweise einer Getriebeausgangswelle eine Überwurfmutter mit einem Innengewinde auf. Dementsprechend wird an der Getriebeausgangswelle eine Wellenmutter vorgesehen, die ein zu dem Innengewinde der Überwurfmutter korrespondierendes Außengewinde aufweist. Somit kann das Kreuzgelenk mit der Getriebeausgangswelle verschraubt werden, wodurch eine lösbare Verbindung zwischen dem Kreuzgelenk und der Getriebeausgangswelle entsteht.

Zur Befestigung der Überwurfmutter an dem Gelenkinnenteil weist dieses gemäß einer Weiterbildung der Erfindung eine Nut auf, in die ein Federabschnitt der Überwurfmutter eingreift, d.h. die Überwurfmutter wird durch eine Nut/Feder-Verbindung an dem Gelenkinnenteil befestigt.

Die Erfindung wird im Folgenden beispielhaft anhand der beiliegenden Figuren erläutert. Es stellen dar:
- Figur 1: eine perspektivische Ansicht des erfindungsgemäßen Kreuzgelenks gemäß einer ersten Ausführungsform der Erfindung;
- Figur 2: eine geschnittene Seitenansicht des erfindungsgemäßen Kreuzgelenks gemäß Figur 1;
- Figur 3: eine Schnittansicht des erfindungsgemäßen Kreuzgelenks entlang der Schnittlinie I-I aus Figur 2;
- Figur 4: eine Schnittansicht des erfindungsgemäßen Kreuzgelenks entlang der Schnittlinie II-II aus Figur 2;
- Figur 5: eine perspektivische Ansicht des erfindungsgemäßen Kreuzgelenks mit daran angeschlossener Drehmomentübertragungsvorrichtung gemäß einer zweiten Ausführungsform der Erfindung;
- Figur 6: eine geschnittene Seitenansicht gemäß der zweiten Ausführungsform der Erfindung;
- Figur 7: eine Schnittansicht entlang der Schnittlinie III-III aus Figur 6;
- Figur 8: eine perspektivische Ansicht des erfindungsgemäßen Kreuzgelenks mit daran angeschlossener Drehmomentübertragungsvorrichtung gemäß einer dritten Ausführungsform der Erfindung;
- Figur 9: eine geschnittene Seitenansicht gemäß der dritten Ausführungsform der Erfindung;
- Figur 10: eine Schnittansicht entlang der Schnittlinie IV-IV aus Figur 9;
- Figur 11: eine achsenthaltende Schnittansicht einer vierten Ausführungsform der Erfindung;
- Figur 12: eine Schnittansicht entlang der Schnittlinie V-V aus Figur 11;
- Figur 13: eine achsenthaltende Schnittansicht einer fünften Ausführungsform der Erfindung;
- Figur 14: eine Schnittansicht entlang der Schnittlinie VI-VI aus Figur 13;
- Figur 15: eine Schnittansicht einer fünften Ausführungsform der Erfindung mit einer Überwurfmutter;
- Figur 16: eine Schnittansicht eines teilweise dargestellten Getriebes; und
- Figur 17: eine Schnittansicht des Kreuzgelenks gemäß der fünften Ausführungsform in einem an dem Getriebe angebrachten Zustand.

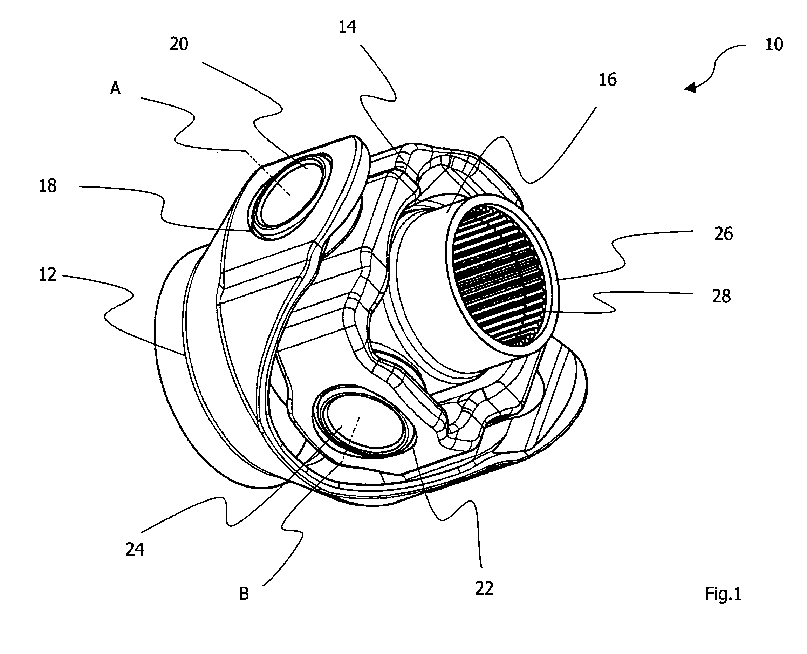

Figur 1 zeigt eine perspektivische Ansicht des Kreuzgelenks 10 mit einer Gelenkgabel 12, einem in dieser Gelenkgabel 12 angeordneten Zwischenglied 14, in dem wiederum das Gelenkinnenteil 16 angeordnet ist. Man erkennt aus Figur 1, dass die Gelenkgabel 12 Lageröffnungen 18 aufweist, durch die das Zwischenglied 14 mit zu Lageröffnungen 18 der Gelenkgabel 12 korrespondierenden Lagerbolzen 20 an die Gelenkgabel 12 koppelbar ist. Das Zwischenglied 14 weist ein zu diesem Paar Lagerbolzen 20 versetztes Paar Lageröffnungen 22 auf, durch die das Gelenkinnenteil 16 mit zu den Lageröffnungen 22 korrespondierenden Lagerbolzen 24 an das Zwischenglied 14 koppelbar ist. Die Lageröffnungen 18 der Gelenkgabel und die zu diesen korrespondierenden Lagerbolzen 20 des Zwischenglieds definieren eine erste Gelenkachse A. Die Lageröffnungen 22 des Zwischenglieds 14 definieren zusammen mit den Lagerbolzen 24 des Gelenkinnenteils 16 eine zweite Gelenkachse B. Die beiden Gelenkachsen A, B verlaufen durch das Zwischenglied 14.

Aus Figur 1 erkennt man ferner eine in dem Gelenkinnenteil 16 ausgebildete Aufnahmeöffnung 26, sowie eine in der Aufnahmeöffnung 26 ausgeformte Innenprofilierung 28. Bei der Innenprofilierung 28 handelt es sich vorzugsweise um eine Innenverzahnung, die durch Räumen oder Fräsen hergestellt werden kann.

In der Aufnahmeöffnung 26 kann ein Wellenabschnitt in Richtung seiner Längsachse verschiebbar aufgenommen werden. Durch die Innenprofilierung bzw. Innenverzahnung 28 und einer an einem hier nicht gezeigten Wellenabschnitt angeformten Außenprofilierung kann ein Drehmoment durch eine Formschluss zwischen der Innenverzahnung 28 und der zu dieser korrespondierenden Außenverzahnung an einem der Wellenabschnitte übertragen werden. Mit anderen Worten ermöglicht die Innenverzahnung 28 eine axial verschiebbare Aufnahme des Wellenabschnitts in der Aufnahmeöffnung 26 und gleichzeitig eine Drehmomentübertragung durch einen Formschluss zwischen der Innenverzahnung 28 und einer zu dieser korrespondierenden Außenverzahnung an einem der Wellenabschnitte.

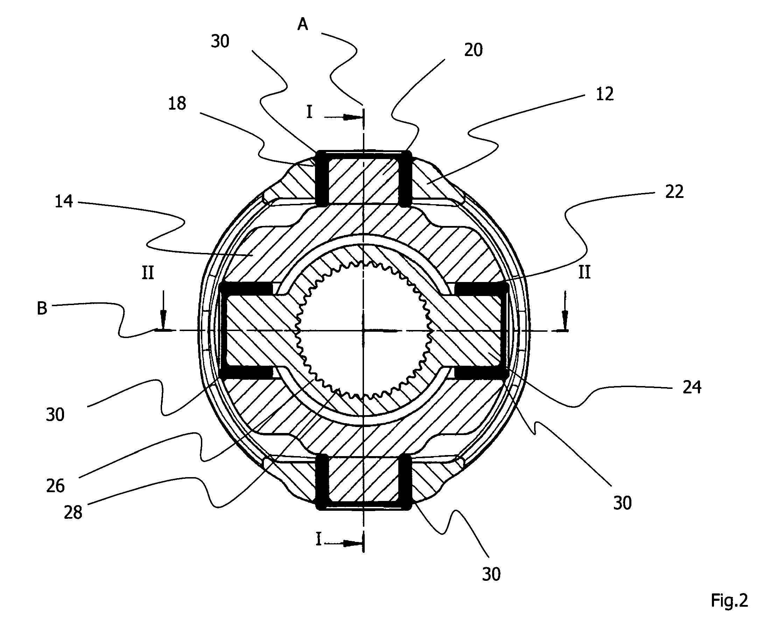

Figur 2 zeigt eine Schnittansicht des Kreuzgelenks 10, wobei die Schnittebene durch die Bolzenachsen A, B verläuft. Man erkennt wiederum aus Figur 2, dass die einzelnen Komponenten des Kreuzgelenks 10 ineinander angeordnet sind, d.h. das ringförmige Zwischenglied 14 wird in der Gelenkgabel 12 angeordnet und das Gelenkinnenteil 16 mit der Aufnahmeöffnung 26 ist in dem ringförmigen Zwischenglied 14 aufgenommen. An den Lageröffnungs-/Lagerbolzen-Paaren 18, 20 und 22, 24 sind in Figur 2 erkennbare Dämpfungskörper 30 angeordnet. Durch die Dämpfungskörper 30 werden Reibungswirkungen zwischen den Lageröffnungen 18, 22 und den Lagerbolzen 20, 24 vermieden. Ferner werden durch die Dämpfungskörper 30 Relativbewegungen zwischen den einzelnen Komponenten unterbunden und das Übertragen von Schwingungen bzw. Vibrationen verhindert.

Figur 2 zeigt erneut, dass die Lageröffnungen 18 in der Gelenkgabel 12 und die Lagerbolzen 20 des Zwischenglieds 14 eine erste Gelenkachse A definieren und die Lageröffnungen 22 in dem Zwischenglied 14 und die Lagerbolzen 24 des Gelenkinnenteils 16 eine zweite Gelenkachse B festlegen. Die beiden Gelenkachsen A, B verlaufen durch das Zwischenglied 14 und kreuzen einander. Durch die beiden Gelenkachsen A, B wird die Grundfunktion des Kreuzgelenks 10 erreicht, nämlich die Übertragung von Drehmomenten zwischen zueinander abgewinkelt verlaufenden Wellenabschnitten, d.h. eine Drehmomentübertragung bei kardanischen Beanspruchungen.

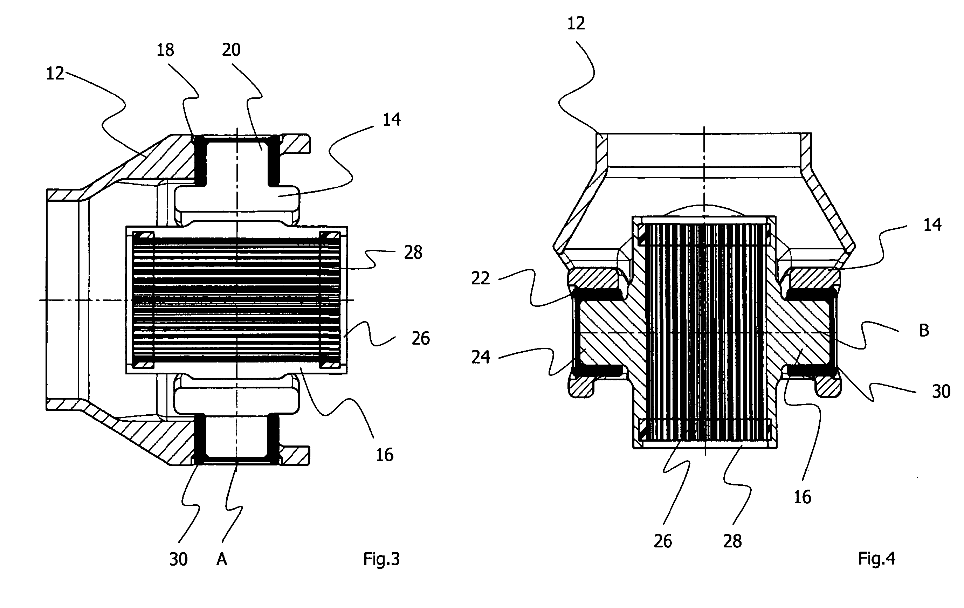

Figur 3 zeigt eine Schnittansicht des Kreuzgelenks 10 entlang der Schnittlinie I-I aus Figur 2. So erkennt man aus Figur 3 wiederum die Gelenkgabel 12 mit den Lageröffnungen 18 sowie das Zwischenglied 14 mit den Lagerbolzen 20 und den dazwischen angeordneten Dämpfungskörpern 30. Ferner erkennt man aus Figur 3, dass es sich bei der Aufnahmeöffnung 26 um eine Durchgangsbohrung handelt, in der eine durchlaufende Längsverzahnung 28 zur Übertragung von Drehmomenten mit einem hier nicht gezeigten Wellenabschnitt vorgesehen ist.

Figur 4 zeigt eine Schnittansicht des Kreuzgelenks 10 entlang der Schnittlinie II-II aus Figur 2. Man erkennt aus Figur 4, wie das Gelenkinnenteil 16 mit seinen Lagerbolzen 24 an das Zwischenglied 14 mit dessen Lageröffnungen 22 gekoppelt ist. Ferner zeigt Figur 4 wiederum die durchlaufende Durchgangsbohrung 26 mit der Innenverzahnung 28.

Im Folgenden sollen mit Bezug auf die folgenden Figuren weitere Ausführungsbeispiele der Erfindung erläutert werden. Zur Vermeidung von Wiederholungen und zur Vereinfachung der Beschreibung werden für gleichwirkende oder gleichartige Komponenten dieselben Bezugszeichen verwendet, wie im ersten Ausführungsbeispiel, jedoch mit einer fortlaufenden Ziffer vorangestellt.

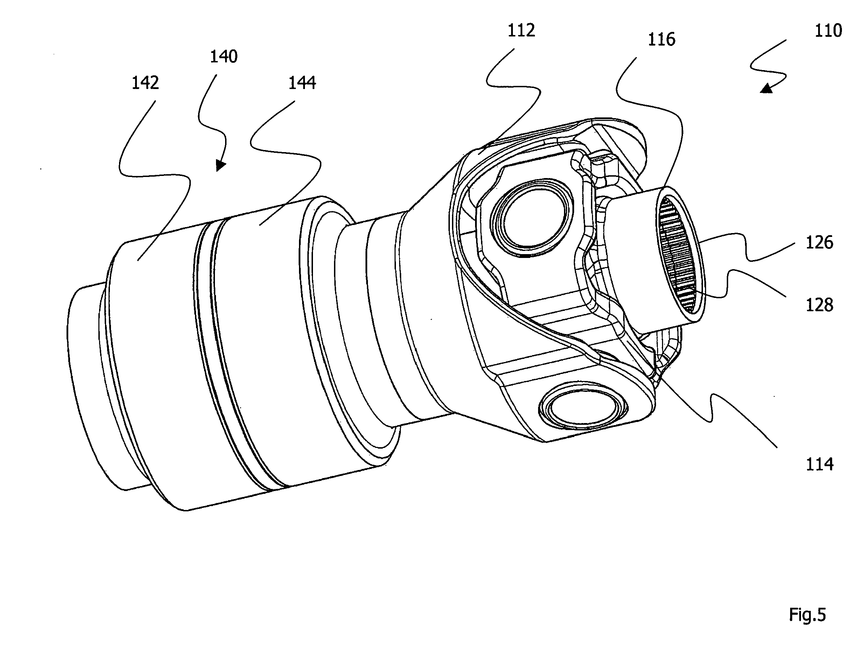

Aus Figur 5 erkennt man das Kreuzgelenk 110 mit einer daran angeschlossenen Vorrichtung zum schwingungsreduzierten Übertragen von Drehmomenten 140 gemäß einem zweiten Ausführungsbeispiel der Erfindung. Figur 5 zeigt die Gelenkgabel 112, das Zwischenglied 114 und das an dieses gekoppelte Gelenkinnenteil 116 mit der Aufnahmeöffnung 126 und der teilweise sichtbaren Innenverzahnung 128. Die Drehmomentübertragungseinrichtung 140 ist fest mit dem Kreuzgelenk 110 verbunden, vorzugsweise durch Verschweißen. Die Drehmomentübertragungseinrichtung verfügt über ein erstes Übertragungsteil 142 und ein zweites Übertragungsteil 144.

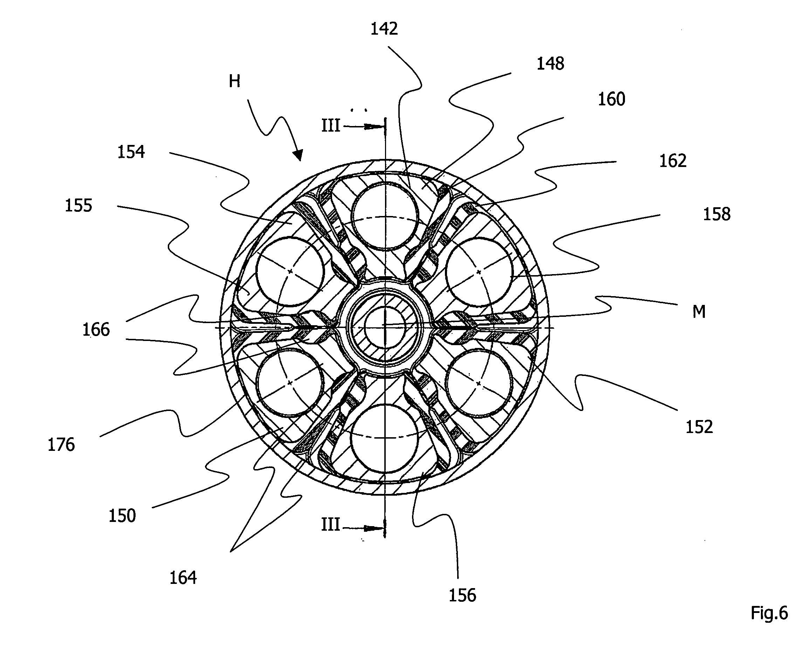

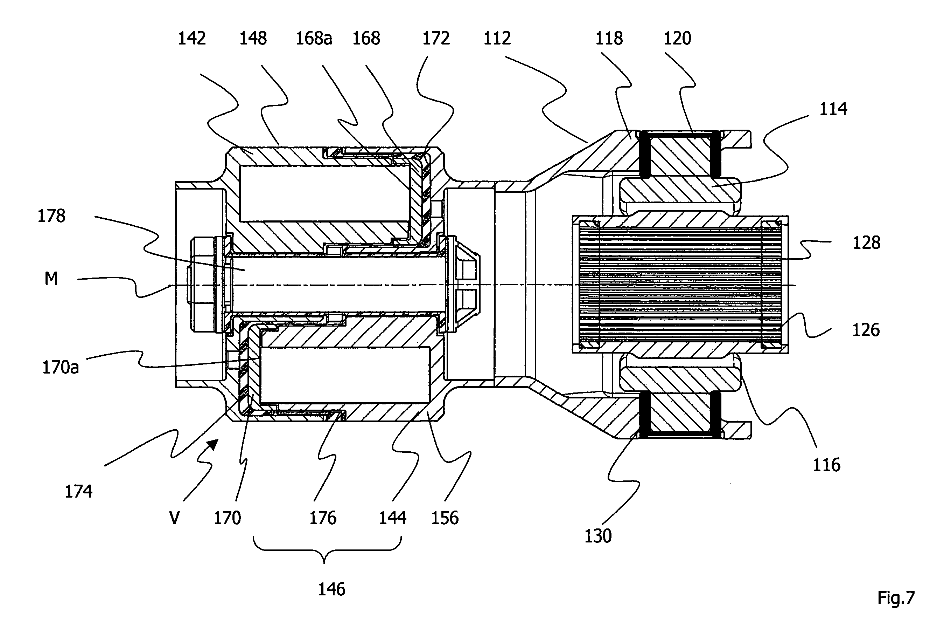

Wie man aus einer vergleichenden Ansicht der Figuren 6 und 7 erkennt, weist die an das Kreuzgelenk 110 gekoppelte Drehmomentübertragungseinrichtung 140, wie bereits erwähnt, ein erstes Übertragungsteil 142 und ein zweites Übertragungsteil 144 auf. Das zweite Übertragungsteil 144 der Drehmomentübertragungseinrichtung 140 ist mit dem Kreuzgelenk 110 fest verbunden, vorzugsweise verschweißt. Die beiden Übertragungsteile 142 und 144 überlappen sich in einem Kopplungsbereich 146, wobei sie in diesem Kopplungsbereich im Querschnitt annähernd kreissektorförmige Klauenformationen aufweisen. Das Übertragungsteil 142 weist insgesamt drei um jeweils 120° zueinander versetzte Klauenformationen 148, 150 und 152 auf (Fig. 6). Diese Klauenformationen 148, 150 und 152 stehen wie in Figur 7 repräsentativ für die Klauenformationen 148 gezeigt, in axialer Richtung vor. Gleichermaßen weist das Übertragungsteil 144 entsprechende Klauenformationen 154, 156 und 158 auf, wobei in Figur 7 nur die Klauenformation 156 gezeigt ist. Die Klauenformationen 154, 156 und 158 an dem zweiten Übertragungsteil 144 sind in gleicher Weise axial vorspringend angeordnet und im Querschnitt annähernd kreissektorförmig ausgebildet.

Im Kopplungsbereich 146 sind die beiden Übertragungsteile 142 und 144 jeweils mit einer Gummischicht 160, 162 überzogen (Fig. 6). Im Einzelnen erkennt man eine entsprechende Gummischicht 160 am Übertragungsteil 142 und eine korrespondierende Gummischicht 162 am Übertragungsteil 144. Die beiden Gummischichten 160 und 162 sind unmittelbar an die Seitenflächen der Klauenformationen 148, 150, 152 und 154, 156 und 158 anvulkanisiert. Die beiden korrespondierenden Gummischichten 160 und 162 bilden eine auf Druck beanspruchte Hauptdämpfereinrichtung H. Ferner erkennt man in Figur 6, dass die Klauenformationen 148, 150, 152 und 154, 156, 158 an ihrem auf die Mittelachse M zulaufenden Ende Ausbuchtungen 164 aufweisen. An den Gummischichten 160, 162 sind im Bereich der Ausbuchtungen 164 bauchige Verdickungen 166 vorgesehen, die die Ausbuchtungen 164 auffüllen und in Richtung der nächsten Klaue einer Klauenformation 148, 150, 152 und 154, 156, 158 in Umfangsrichtung vorstehen. Die Ausbuchtungen 164 und die bauchigen Verdickungen 166 wirken als in die Hauptdämpfereinrichtung H integrierter Vordämpfer.

Neben der auf Druck beanspruchten Hauptdämpfereinrichtung H sieht die Drehmomentübertragungsvorrichtung 140 eine auf Torsion beanspruchbare Vordämpfereinrichtung V vor. Zur Übertragung von Drehmomenten auf die Vordämpfereinrichtung V sind Aufnahmeschalen 168 und 170 angeordnet (Fig.7), die mit den Klauen der Klauenformationen 148, 50, 152 und 155, 156, 158 korrespondieren und diese formschlüssig mit ihren Aufnahmeöffnungen 168a und 170a aufnehmen. Die Anzahl der Aufnahmeschalen 168, 170 entspricht der Anzahl der Klauen der Klauenformationen 148, 150, 152 und 154, 156, 158, repräsentativ werden hier nur die Aufnahmeschalen 168 und 170 gezeigt. Die Aufnahmeschalen 168 und 170 sind jeweils an einem der Übertragungsteile 142 und 144 durch eine Gummischicht 172, 174 angebunden, d.h. anvulkanisiert.

Zur Führung der Übertragungsteile 142 und 144 ist in deren Umfangsbereich eine Führungshülse 176 angeordnet.

Im zentralen Bereich der Drehmomentübertragungsvorrichtung 140 ist ein Positionierstift 178 angeordnet, dessen Längsachse im Wesentlichen mit der Längsachse M der Drehmomentübertragungsvorrichtung 140 fluchtet. Der Positionierstift 178 dient zur Aufrichtung des ersten Übertragungsteils 142 relativ zum zweiten Übertragungsteil 144.

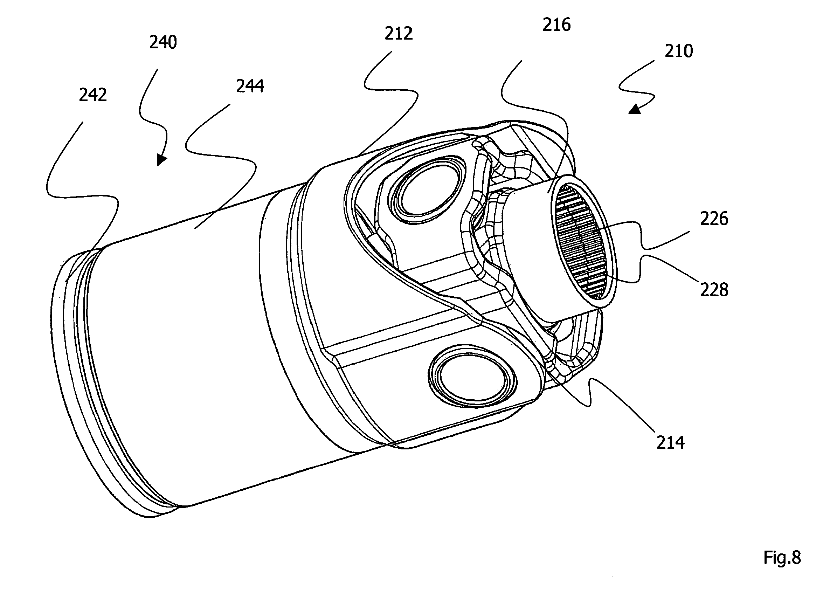

Figur 8 zeigt eine perspektivische Ansicht des Kreuzgelenks 210 mit einer an dieser befestigten Drehmomentübertragungseinrichtung 240. So zeigt Figur 8 wiederum die Gelenkgabel 212, das Zwischenglied 214 und das Gelenkinnenteil 216 mit der Aufnahmeöffnung 226 und der darin ausgebildeten Innenverzahnung 228.

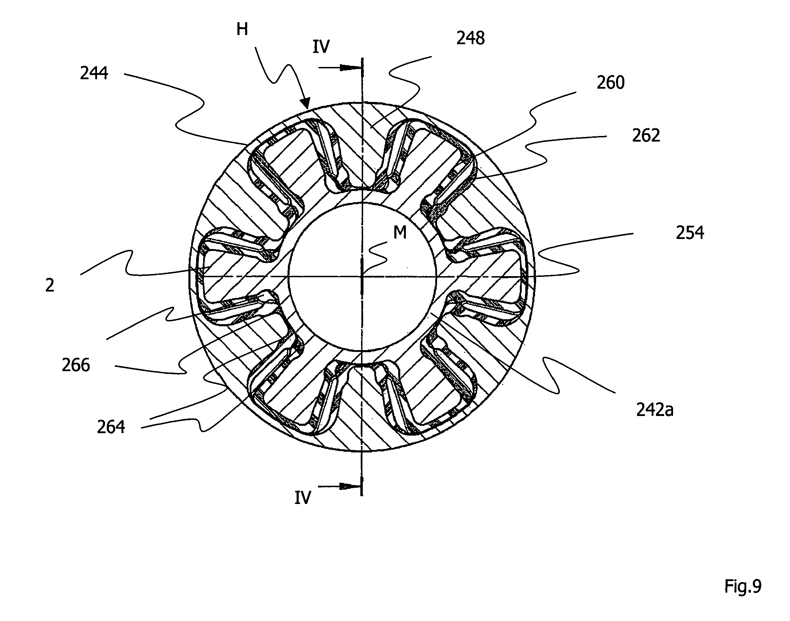

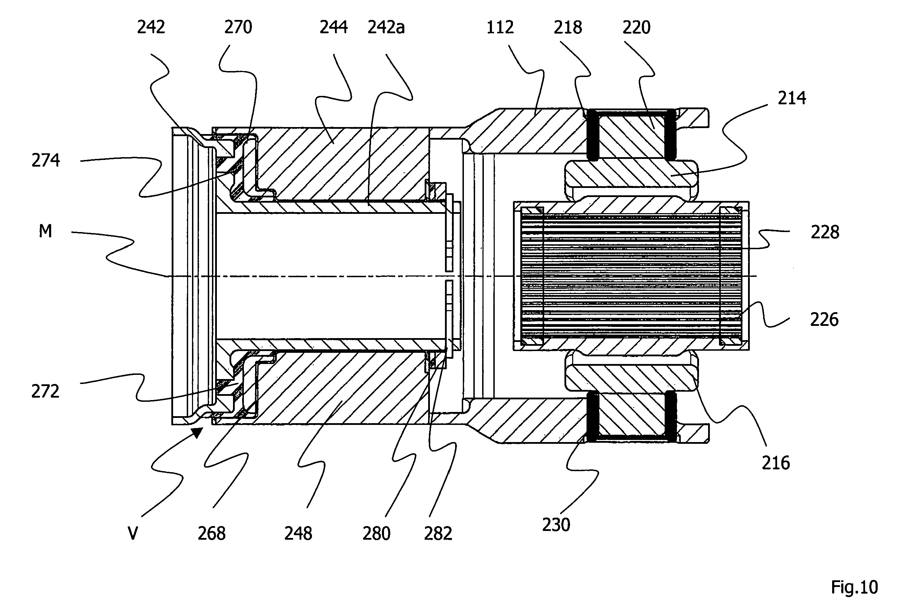

Aus einer vergleichenden Ansicht der Figuren 9 und 10 erkennt man, dass die Übertragungsvorrichtung 240 wiederum zwei Übertragungsteile 242 und 244 aufweist. Das Kreuzgelenk 210 ist mit der Drehmomentübertragungseinrichtung 240 fest verbunden, vorzugsweise verschweißt, d.h. das Kreuzgelenk 210 ist mit dem Übertragungsteil 244 verschweißt. Das Übertragungsteil 244 ist rohrförmig ausgebildet und umgibt das Übertragungsteil 242 im Kopplungsbereich 246 vollständig. Das Übertragungsteil 244 weist sechs um 45° zueinander versetzte Klauenformationen 248 (alle Klauen der Übertragungsteile werden zur Vereinfachung der Beschreibung einheitlich mit einem Bezugszeichen versehen) auf. Mit anderen Worten sind die Klauen 248 des Übertragungsteils 244 als Vorsprünge in dem rohrförmigen Übertragungsteil 244 ausgebildet. Das Übertragungsteil 242, das von dem Übertragungsteil 244 vollständig umgeben wird, weist zu den Klauen 248 des Übertragungsteils 244 sechs korrespondierende Klauen 256 auf. Die Klauen 256 springen jeweils um 60° zueinander versetzt, sternförmig von einem rohrähnlichen Abschnitt 242a des Übertragungsteils 242 vor. Im Kopplungsbereich 246 sind die Übertragungsteile 242 und 244 jeweils mit einer Gummischicht 260 und 262 überzogen.

Ferner erkennt man aus Figur 9, dass die Klauenformationen 248, 256 an ihrem auf die Mittelachse zulaufenden Ende Ausbuchtungen 264 aufweisen. An den Gummischichten 260, 262 sind im Bereich der Ausbuchtungen 264 bauchige Verdickungen 266 vorgesehen, die die Ausbuchtungen 264 auffüllen und in Richtung der nächsten Klaue einer Klauenformation 248, 256 in Umfangsrichtung vorstehen. Die Ausbuchtungen 264 und die bauchigen Verdickungen 266 wirken als in die Hauptdämpfereinrichtung H integrierter Vordämpfer.

Neben der auf Druck beanspruchten Hauptdämpfervorrichtung H sieht die Drehmomentübertragungsvorrichtung 240 eine auf Torsion beanspruchbare Vordämpfereinrichtung V vor. An dem Übertragungsteil 242 sind Aufnahmeteile 270 vorgesehen, die mit den Klauen der Klauenformationen 248 des Übertragungsteils 244 korrespondieren. Die Aufnahmeteile 270 sind über eine Gummischicht 274 mit dem Übertragungsteil 242 verbunden.

Aus Figur 10 erkennt man, dass die beiden Übertragungsteile ineinander gesteckt werden, wobei sie sich gegenseitig zentrieren. Im Anschluss an das Ineinanderstecken, bei dem die Klauenformation 256 vollständig von der Klauenformation 248 des Übertragungsteils 244 aufgenommen wird, wird an dem in Figur 9 rechten Ende der Drehmomentübertragungseinrichtung 240 das Übertragungsteil 242 durch eine Spannscheibe 280 und einen Sicherungsring 282 an dem Übertragungsteil 244 befestigt. Mit anderen Worten werden die beiden Übertragungsteile 242, 244 mit einer vorbestimmten Vorspannung aneinander befestigt.

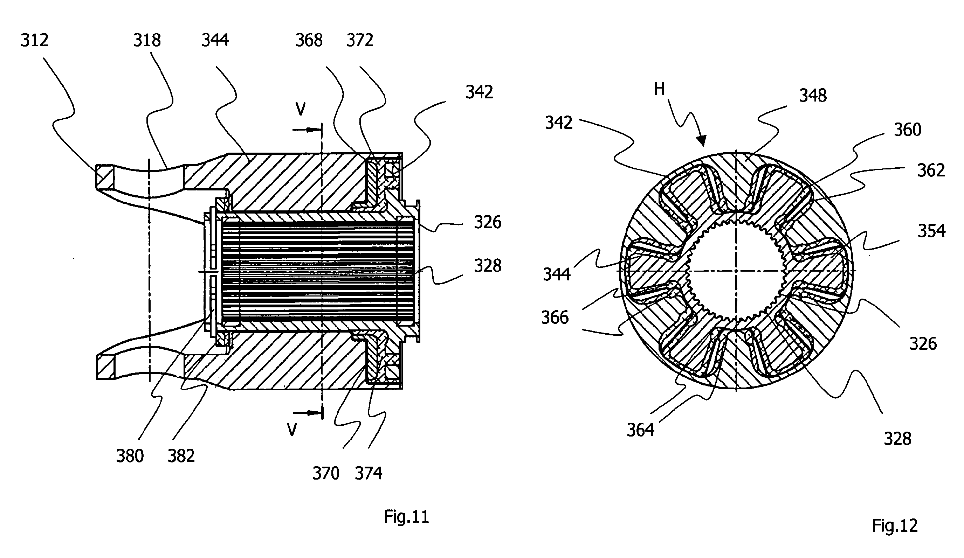

Figur 11 zeigt eine achsenthaltende Schnittansicht einer vierten Ausführungsform der Erfindung. Man erkennt aus Figur 11 die Gelenkgabel 312, in die eine Drehmomentübertragungsvorrichtung 340 integriert ist. Die Übertragungsvorrichtung 340 weist zwei Übertragungsteile 342 und 344 auf. Das Übertragungsteil 344 ist einstückig mit der Gelenkgabel 312 ausgebildet. In dem Übertragungsteil 344 ist eine Aufnahmeöffnung bzw. eine Durchgangsbohrung 326 mit einer Innenprofilierung 328 zur axial verschiebbaren Aufnahme eines der Wellenabschnitte vorgesehen. Die Übertragungsvorrichtung 340 ist vom Aufbau her der mit Bezug auf Figur 9 beschriebenen Übertragungsvorrichtung 240 ähnlich. So weist sie ebenfalls Aufnahmeteile 368, 370 auf, die über eine Gummischicht 372, 374 an das Übertragungsteil 342 angebunden, d.h. anvulkanisiert, sind.

Ferner erkennt man aus Figur 11, dass die beiden Übertragungsteile ineinander gesteckt werden, wobei sie sich gegenseitig zentrieren. Im Anschluss an das Ineinanderstecken, bei dem das Übertragungsteil 344 vollständig von dem Übertragungsteil 342 aufgenommen wird, wird an dem in Figur 11 linken Ende der Übertragungseinrichtung 340 das Übertragungsteil 344 durch eine Spannscheibe 380 und einem Sicherungsring 382 mit dem Übertragungsteil 344 aneinander befestigt werden.

Figur 12 zeigt eine Schnittansicht entlang der Schnittlinie V-V aus Figur 11. Man erkennt die Klauenformationen 348, 356, die jeweils mit einer Gummischichten 360, 362 überzogen sind. Zudem erkennt man in dem Übertragungsteil 342 die Aufnahmeöffnung 326 mit der darin ausgebildeten Innenverzahnung 328. Figur 12 entspricht bis auf die Aufnahmeöffnung 326 mit der darin ausgebildeten Innenverzahnung 328 der mit Bezug auf das zweite Ausführungsbeispiel beschriebenen Figur 9.

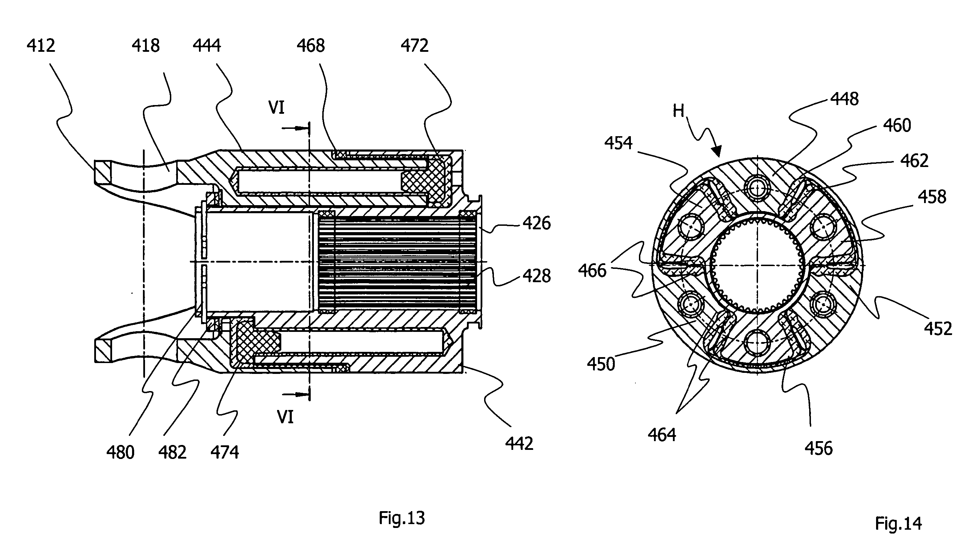

Die Figuren 13 und 14 zeigen Schnittansichten einer fünften Ausführungsform der Erfindung.

Aus Figur 13 erkennt man die Gelenkgabel 412 mit der darin integrierten Übertragungsvorrichtung 440. Die Gelenkgabel 412 ist einstückig mit dem Übertragungsteil 444 der Übertragungsvorrichtung 440 ausgebildet. In dem Übertragungsteil 442 ist die Aufnahmeöffnung bzw. Durchgangsbohrung 426 mit der Innenverzahnung 428 vorgesehen. Die Übertragungsteile 442 und 444 sind über Gummischichten 484 miteinander verbunden.

Figur 14 zeigt eine Schnittansicht entlang der Schnittlinie VI-VI aus Figur 13. Diese Figur 14 unterscheidet sich von der mit Bezug auf das zweite Ausführungsbeispiel beschriebene Figur 6 lediglich durch die in dem Übertragungsteil 442 ausgebildete Durchgangsbohrung 426 und der in dieser vorgesehenen Innenprofilierung 428.

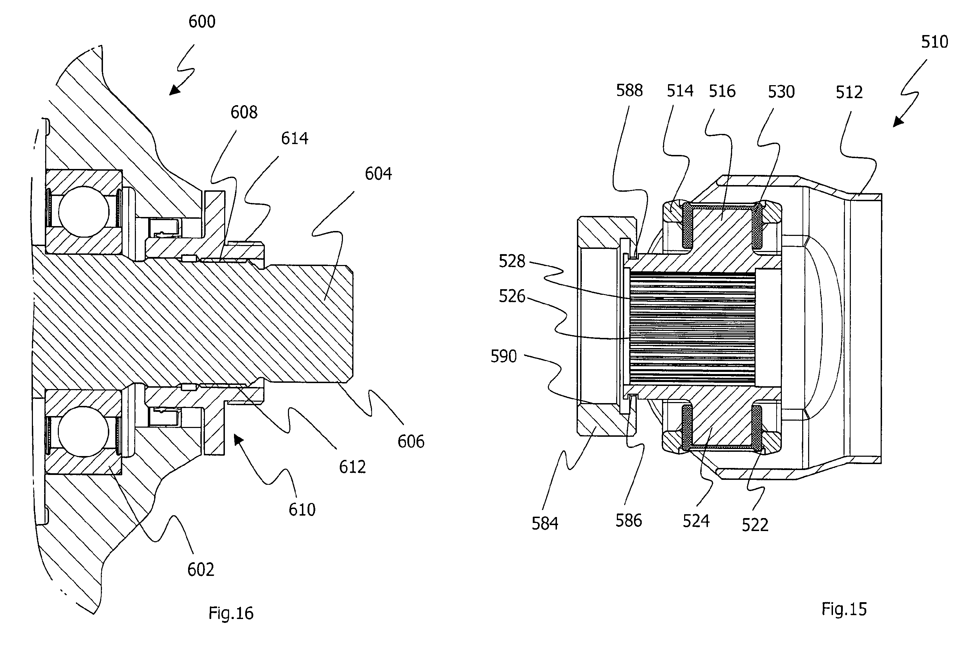

Figur 15 zeigt eine Schnittansicht einer fünften Ausführungsform der Erfindung mit einer an dem Kreuzgelenk 510 angebrachten Überwurfmutter 584. In Figur 15 erkennt man die Gelenkgabel 512, das in der Gelenkgabel 512 angeordnete Zwischenglied 514, in dem wiederum das Gelenkinnenteil 516 angeordnet ist. Das Gelenkinnenteil 516 ist über die Lagerbolzen 524 und die zu diesen korrespondierenden Lageröffnungen 522 in dem Zwischenglied 514 an das Zwischenglied 514 koppelbar. Ferner zeigt Figur 15 erneut die Aufnahmeöffnung 526 mit der darin ausgeformten Innenprofilierung 528 in Form einer Innenverzahnung.

Wie man aus Figur 15 weiter erkennt, weist das Gelenkinnenteil 516 eine umlaufende Nut 586 auf, in die ein Federabschnitt 588 der Überwurfmutter 584 eingreift, um die Überwurfmutter 584 an dem Gelenkinnenteil 516 zu befestigen. Am Innenumfang der Überwurfmutter 584 ist ein Innengewinde 590 ausgebildet, mit dem die Überwurfmutter 584 an einen ein entsprechendes Außengewinde aufweisenden Wellenabschnitt koppelbar ist.

Figur 16 zeigt eine Schnittansicht eines teilweise dargestellten Getriebes 600 mit einer über ein Lager 602 gelagerten Getriebeausgangswelle 604. Die Getriebeausgangswelle 604 weist eine zu der Innenverzahnung 528 des Gelenkinnenteils 516 korrespondierende Außenverzahnung 606 auf. An der Getriebeausgangswelle 604 ist ferner ein Abschnitt 608 mit einem Außengewinde vorgesehen. Auf dem Außengewindeabschnitt 608 ist eine Wellenmutter 610 mit ihrem zu dem Außengewinde 608 korrespondierenden Innengewinde 612 aufgeschraubt. Die Wellenmutter 610 weist einen Abschnitt mit einem Außengewinde 614 auf, der mit dem korrespondierenden Innengewinde 590 der Überwurfmutter 584 verschraubt werden kann.

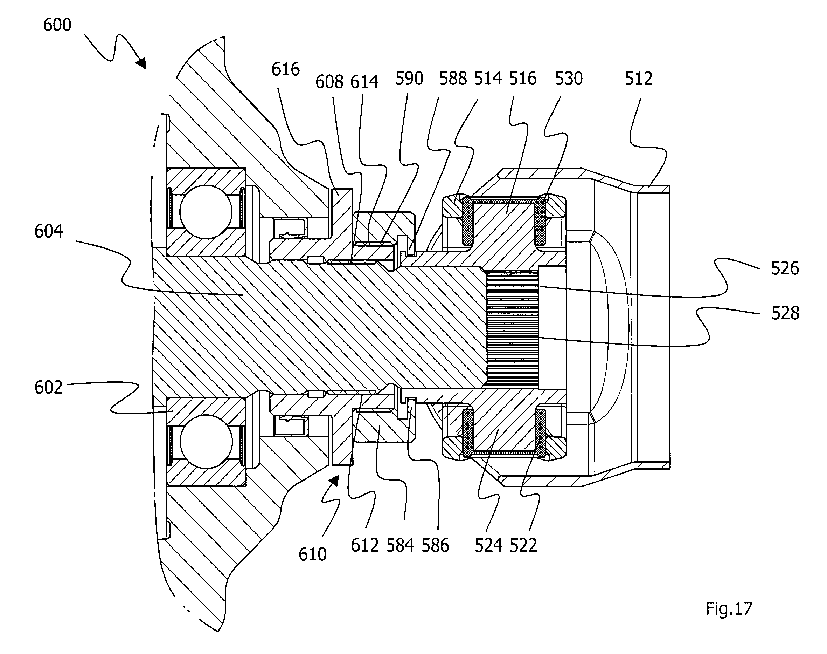

Figur 17 zeigt das Kreuzgelenk 510 im an der Getriebeausgangswelle 604 angebrachten Zustand. Man erkennt aus Figur 17, dass die Außenverzahnung 606 der Getriebeausgangswelle 604 in die korrespondierende Innenverzahnung 528 in der Aufnahmeöffnung 526 des Gelenkinnenteils 516 zur Drehmomentübertragung eingreift. Ferner erkennt man in Figur 17, dass die Überwurfmutter 584 mit ihrem Innengewinde 590 auf das Außengewinde 614 der Wellenmutter 610 aufgeschraubt ist. Mit anderen Worten entsteht eine lösbare Verbindung zwischen der Getriebeausgangswelle 604 bzw. dem Getriebe 600 und dem Kreuzgelenk 510. Im verbundenen Zustand, d.h. die Überwurfmutter 584 ist mit der Wellenmutter 610 verschraubt, legt sich die Überwurfmutter 584 an einen in radialer Richtung umlaufenden Ringabschnitt 616 an, der das Ende des Außengewindeabschnitts 614 der Überwurfmutter 584 darstellt.

## Patentansprüche

1. Kreuzgelenk (10) zum Verbinden zweier Wellenabschnitte in einer Wellenanordnung, mit:
- einer Gelenkgabel (12), die mit einem der Wellenabschnitte verbindbar ist und ein Paar erster Lagerelemente (18) aufweist, die eine erste Gelenkachse (A) definieren;
- einem Gelenkinnenteil (16), das mit dem anderen der Wellenabschnitte drehmomentübertragend koppelbar ist und das ein Paar zweiter Lagerelemente (24) aufweist, die eine zweite Gelenkachse (B) definieren; und
- einem Zwischenglied (14), das zu den ersten Lagerelementen (18) der Gelenkgabel (12) korrespondierende erste Komplementärlagerelemente (20) und zu den zweiten Lagerelementen (24) des Gelenkinnenteils (14) korrespondierende zweite Komplementärlagerelemente (22) aufweist,
wobei die erste Gelenkachse (A) im wesentlichen orthogonal zur zweiten Gelenkachse (B) verläuft und wobei wenigstens einer der Wellenabschnitte in Richtung seiner Längsachse verschiebbar in der Gelenkgabel (12) oder dem Gelenkinnenteil (16) aufgenommen ist,
**dadurch gekennzeichnet, dass** die Gelenkgabel (12) eine Vorrichtung (140; 240) zum schwingungsreduzierten Übertragen von Drehmomenten aufweist, bei der zwischen zwei drehmomentübertragenden Übertragungsteilen (142, 144; 242, 244) eine schwingungsreduzierende Dämpfereinrichtung angeordnet ist.

2. Kreuzgelenk (10) nach Anspruch 1,
**dadurch gekennzeichnet, dass** die Lagerelemente (18, 24) und die korrespondierenden Komplementärlagerelemente (20, 22) jeweils von einem Paar miteinander zusammenwirkender Lagerbolzen (20, 24) und Lageröffnungen (18, 22) gebildet sind.

3. Kreuzgelenk (10) nach Anspruch 2,
**dadurch gekennzeichnet, dass** zwischen den Lageröffnungen (18, 22) und den Lagerbolzen (20, 24) Dämpfungskörper (30) angeordnet sind.

4. Kreuzgelenk (10) nach einem der vorangehenden Ansprüche,
**dadurch gekennzeichnet, dass** das Zwischenglied (14) ringförmig ausgebildet ist und in der Gelenkgabel (12) aufgenommen ist, wobei das Gelenkinnenteil (16) in dem Zwischenglied (14) angeordnet ist, und wobei die erste und die zweite Gelenkachse (A, B) durch das Zwischenglied (14) verlaufen.

5. Kreuzgelenk (10) nach einem der vorangehenden Ansprüche,
**dadurch gekennzeichnet, dass** die ersten und zweiten Gelenkachsen (A, B) einander kreuzen.

6. Kreuzgelenk (10) nach einem der vorangehenden Ansprüche,
**dadurch gekennzeichnet, dass** das Gelenkinnenteil (16) oder/und die Gelenkgabel (12) eine Aufnahmeöffnung (26) mit einer Innenprofilierung (28), vorzugsweise einer Innenverzahnung, zum drehfesten Verbinden mit dem Wellenabschnitt aufweist, wobei der der jeweiligen Innenprofilierung (28) zugeordnete Wellenabschnitt eine korrespondierende Außenprofilierung, insbesondere eine Außenverzahnung, aufweist.

7. Kreuzgelenk (10) nach Anspruch 6,
**dadurch gekennzeichnet, dass** das die Aufnahmeöffnung (26) eine Durchgangsbohrung mit einer durchlaufenden Längsverzahnung (28) ist.

8. Kreuzgelenk (310; 410) nach einem der Ansprüche 1 bis 5,
**dadurch gekennzeichnet, dass** in einem der Übertragungsteile (342, 344; 442, 444) eine Aufnahmeöffnung (326; 426) vorgesehen ist, die eine Innenprofilierung (328; 428), vorzugsweise eine Innenverzahnung, aufweist.

9. Kreuzgelenk (510) nach einem der vorangehenden Ansprüche,
**dadurch gekennzeichnet, dass** das Gelenkinnenteil (516) eine Überwurfmutter (584) mit einem Innengewinde (590) aufweist.

10. Kreuzgelenk nach Anspruch 9,
**dadurch gekennzeichnet, dass** das Gelenkinnenteil (516) eine Nut (586) aufweist, in die ein Federabschnitt (588) der Überwurfmutter (584) eingreift.

## Claims

1. A universal joint (10) for connecting two shaft portions in a shaft arrangement, comprising:
- a joint fork (12) which is connectable to one of the shaft portions and comprises a pair of first bearing elements (18) defining a first joint axis (A);
- an inner joint part (16) which is coupleable to the other one of the shaft portions in a torque-transmitting manner and comprises a pair of second bearing elements (24) defining a second joint axis (B); and
- an intermediate member (14) which comprises first complementary bearing elements (20) corresponding to the first bearing elements (18) of the joint fork (12) and second complementary bearing elements (22) corresponding to the second bearing elements (24) of the inner joint part (14);
wherein the first joint axis (A) is substantially orthogonal to the second joint axis (B), and wherein at least one of the shaft portions is received in the joint fork (12) or the inner joint part (16) in a manner displaceable in the direction of its longitudinal axis; **characterized in that** the joint fork (12) is a device (140; 240) for vibration-reduced transmission of torques, in which a vibration-reducing damping device is arranged between two torque-transmitting transmission parts (142, 144; 242, 244).

2. The universal joint (10) according to claim 1,
**characterized in that** the bearing elements (18, 24) and the corresponding complementary bearing elements (20, 22) are respectively formed by a pair of cooperating bearing pins (20, 24) and bearing openings (18, 22).

3. The universal joint (10) according to claim 2,
**characterized in that** damping bodies (30) are arranged between the bearing openings (18, 22) and the bearing pins (20, 24).

4. The universal joint (10) according to any one of the preceding claims,
**characterized in that** the intermediate member (14) is annular in shape and is received in the joint fork (12), wherein the inner joint part (16) is arranged in the intermediate member (14), and wherein the first and second joint axes (A, B) run through the intermediate member (14).

5. The universal joint (10) according to any one of the preceding claims,
**characterized in that** the first and second joint axes (A, B) cross each other.

6. The universal joint (10) according to any one of the preceding claims,
**characterized in that** the inner joint part (16) or/and the joint fork (12) comprise a receiving opening (26) having an internal profile (28), preferably an internal toothing, for torque-proof connection to the shaft portion, wherein the shaft portion associated with the respective internal profile (28) comprises a corresponding external profile, especially an external toothing.

7. The universal joint (10) according to claim 6,
**characterized in that** the receiving opening (26) is a through hole having a continuous longitudinal toothing (28).

8. The universal joint (310; 410) according to any one of claims 1 to 5,
**characterized in that** a receiving opening (326; 426) is provided in one of the transmission parts (342, 344; 442, 444), which receiving opening comprises an internal profile (328; 428), preferably an internal toothing.

9. The universal joint (510) according to any one of the preceding claims,
**characterized in that** the inner joint part (516) comprises a cap nut (584) having an internal thread (590).

10. The universal joint according to claim 9,
**characterized in that** the inner joint part (516) comprises a groove (586) which is engaged by a spring portion (588) of the cap nut (584).

## Revendications

1. Joint universel (10) destiné à raccorder deux segments d'arbre dans un agencement d'arbres, comportant
- une fourchette de joint (12) pouvant être raccordée à l'un des segments d'arbre et présentant une paire de premiers éléments de palier (18) qui définissent un premier axe de joint (A),
- une partie interne de joint (16) pouvant être accouplée à l'autre des segments d'arbre de façon à transmettre un couple et présentant une paire de seconds éléments de palier (24) qui définissent un second axe de joint (B), et
- un élément intermédiaire (14) présentant des premiers éléments de palier complémentaires (20) correspondant aux premiers éléments de palier (18) de la fourchette de joint (12) et des seconds éléments de palier complémentaires (22) correspondant aux seconds éléments de palier (24) de la partie interne de joint (14),
le premier axe de joint (A) s'étendant de manière sensiblement orthogonale par rapport au second axe de joint (B) et au moins un des segments d'arbre pouvant être logé dans la fourchette de joint (12) ou la partie interne de joint (16) de manière mobile dans la direction de son axe longitudinal,
**caractérisé en ce que** la fourchette de joint (12) présente un dispositif (140 ; 240) qui permet la transmission de couples moyennant une réduction des vibrations et dans le cadre duquel un dispositif d'amortissement réducteur de vibrations est disposé entre deux éléments de transmission de couple (142, 144 ; 242, 244).

2. Joint universel (10) selon la revendication 1,
**caractérisé en ce que** les éléments de palier (18, 24) et les éléments de palier complémentaires (20, 22) correspondants sont respectivement formés par une paire d'axes de palier (20, 24) et d'ouvertures de palier (18, 22) coopérant entre eux.

3. Joint universel (10) selon la revendication 2,
**caractérisé en ce que** des corps d'amortissement (30) sont disposés entre les ouvertures de palier (12, 22) et les axes de palier (20, 24).

4. Joint universel (10) selon l'une des revendications précédentes,
**caractérisé en ce que** l'élément intermédiaire (14) est de forme annulaire et logé dans la fourchette de joint (12), la partie interne de joint (16) étant disposée dans l'élément intermédiaire (14), et le premier et le deuxième axe de joint (A, B) s'étendant à travers l'élément intermédiaire (14).

5. Joint universel (10) selon l'une des revendications précédentes,
**caractérisé en ce que** les premier et deuxième axes de joint (A, B) se croisent.

6. Joint universel (10) selon l'une des revendications précédentes,
**caractérisé en ce que** la partie interne de joint (16) et/ou la fourchette de joint (12) présentent une ouverture de logement (26) pourvue d'un profil intérieur (28), préférentiellement d'une denture intérieure, pour le raccord fixe en rotation au segment d'arbre, le segment d'arbre associé au profil intérieur (28) présentant un profil extérieur correspondant, en particulier une denture extérieure.

7. Joint universel (10) selon la revendication 6,
**caractérisé en ce que** ladite ouverture de logement (26) consiste en un alésage traversant pourvu d'une denture longitudinale (28) continue.

8. Joint universel (310 ; 410) selon l'une des revendications 1 à 5,
**caractérisé en ce qu'**une ouverture de logement (326 ; 426) présentant un profil intérieur (328 ; 428), préférentiellement une denture intérieure, est prévue dans un des éléments de transmission (342, 344 ; 442, 444).

9. Joint universel (510) selon l'une des revendications précédentes,
**caractérisé en ce que** la partie interne de joint (516) présente un écrou-raccord (584) pourvu d'un taraudage (590).

10. Joint universel selon la revendication 9,
**caractérisé en ce que** la partie interne de joint (516) présente une rainure (586) dans laquelle vient en prise une partie formant languette (588) de l'écrou-raccord (584).
